# FASCICULE DE BREVET EUROPEEN

(11) **EP 1 742 146 B1**
(45) Date de publication et mention de la délivrance du brevet: **01.10.2008**
(21) Numéro de dépôt: 06290994.0
(22) Date de dépôt: 19.06.2006
(51) Int. Cl.: G06F 5/06, H04Q 7/32

(54) **Adapation de débit binaire dans un flot de traitement de données**
Adaption der Datenübertragungsgeschwindigkeit in einem Strom zur Verarbeitung von Daten
Adaptation of the bit rate in a data-processing flow

(30) Priorité: 06.07.2005 FR 0507203
(43) Date de publication de la demande: 10.01.2007
(73) Titulaire: STMICROELECTRONICS SA, 92120 Montrouge (FR)
(72) Inventeur: Ries, Gilles, 38320 Grenoble (FR); Agaesse, Jean-François, 38620 Montferrat (FR)
(74) Mandataire: Gendron, Vincent Christian

(56) Documents cités:
- EP-A- 1 401 108
- EP-A- 1 509 044

## Description

L'invention concerne de façon générale les flots de traitement de données, et en particulier l'adaptation de débit binaire dans un flot de traitement de données.

Une adaptation de débit binaire a lieu lorsqu'une fonction mise en oeuvre dans le flot de traitement de données modifie le débit des données, c'est-à-dire lorsque la quantité moyenne de données varie entre l'entrée et la sortie de la fonction. La présence de fonctions à adaptation de débit binaire dans un flot de traitement rend son comportement temporel non-prévisible. Lorsque le flot de traitement implique plusieurs fonctions à adaptation de débit binaire en série, il est difficile à mettre en oeuvre au niveau matériel (« hardware » en anglais). En effet, un grand nombre de configurations possibles doit être testé pour garantir un flot de traitement sans interruption.

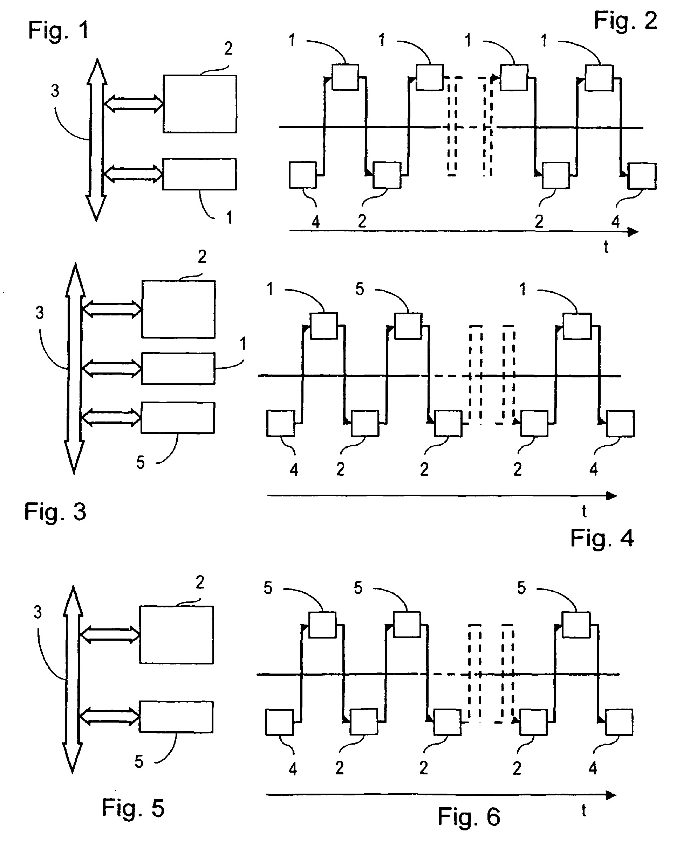

Une gestion logicielle (« software » en anglais) des flots de traitement est généralement utilisée pour des débits réduits, par exemple inférieurs au Mbit/s. Les figures 1 et 2 illustrent schématiquement un tel fonctionnement. Un processeur d'utilisation générale 1, une mémoire 2 et une interface 4 communiquent par le bus 3. Le processeur 1 est utilisé pour traiter séquentiellement l'ensemble des fonctions requises par le flot de traitement. Chaque fonction du processeur 1 se voit allouer un emplacement dédié de la mémoire 2. L'interface 4 transmet au processeur 1 un bloc de données à traiter par une fonction. La fonction traite ensuite le bloc de données dans le processeur 1 (par exemple par modification, ajout ou suppression de données). Lorsque la fonction a terminé le traitement du bloc, le bloc de données modifié est placé dans l'emplacement dédié de la mémoire 2. Une autre fonction du flot de traitement est alors lancée. Un bloc de données est transféré d'un emplacement dédié de la mémoire 2 vers le processeur 1, traité par la fonction dans la processeur 1, puis transféré vers l'emplacement dédié de la mémoire 2. Cette solution logicielle est relativement aisée à déboguer et à faire évoluer.

La solution logicielle accroît cependant le coût des composants matériels: cette solution exige un processeur suffisamment performant pour mettre en oeuvre toutes les fonctions du flot : un tel processeur est en général optimisé pour les applications spécifiques visées par le flot de traitement. Il est aussi connu de EP-A-1509444 d'utiliser des processeurs spécialisés en parallèle. En outre, la quantité de mémoire doit être suffisante pour mémoriser un bloc de données complet pour chacune de ces fonctions.

Selon un perfectionnement, la mémoire 2 est constituée d'une part d'une mémoire cache interne et de petite dimension et d'autre part d'une mémoire externe moins rapide, moins coûteuse et de plus grande dimension. Des blocs d'information contiguë de programme sont mémorisés dans la mémoire cache interne. Cependant, le temps de réponse et la dissipation de puissance sont généralement accrus du fait des transferts supplémentaires induits entre la mémoire cache et la mémoire externe.

Pour des appareils nécessitant des vitesses de traitement élevées avec une dissipation de puissance moindre (par exemple des appareils portatifs tels que des téléphones mobiles selon la norme 3GPP), une solution mixte logicielle/matérielle est privilégiée. Les figures 3 et 4 illustrent son fonctionnement. Le traitement de fonctions spécifiques est ainsi attribué à un circuit d'accélération 5. Le circuit d'accélération 5 communique avec le processeur d'utilisation générale 1 et la mémoire 2 par l'intermédiaire du bus 3. Le processeur 1 met en oeuvre un traitement logiciel d'un certain nombre de fonctions, tandis que d'autres fonctions critiques ont un traitement sur mesure dans le circuit d'accélération 5. Par exemple, pour une application de restitution de vidéo, une fonction associée à la décompression d'image sera considérée comme une fonction critique.

Lors d'une première étape, un premier bloc est transféré de l'interface 4 vers le processeur 1. Lors d'une seconde étape, une fonction traite ce bloc dans le processeur 1. Lors d'une troisième étape, ce bloc est transféré dans la mémoire 2. Lors d'une quatrième étape un bloc associé à une fonction critique est transféré de la mémoire 2 vers le circuit d'accélération 5. Lors d'une cinquième étape, la fonction critique traite le bloc dans le circuit d'accélération 5. Lors d'une sixième étape, ce bloc est transféré du circuit d'accélération 5 vers la mémoire 2. Le cas échéant, un certain nombre de transferts entre la mémoire et le circuit d'accélération 5 ou le processeur 1 sont effectués pour le traitement de fonctions critiques ou non.

Lorsque l'ensemble des fonctions est considéré comme critique, une solution matérielle est adoptée. Le fonctionnement de cette solution est illustré aux figures 5 et 6. Lorsque le flot de traitement est en série (c'est-à-dire lorsque la séquence de fonctionnement peut être déterminée à l'avance même si certaines fonctions sont court-circuitées pour respecter certaines exigences de fonctionnement), les traitements sont effectués uniquement par un ou plusieurs circuits d'accélération dédiés 5 formant une chaîne de flot de traitement au moyen de mémoires tampon intermédiaires 2.

Les performances de cette solution sont supérieures à celles des solutions citées précédemment. De plus, sa consommation électrique est moindre car seules les fonctions requises par le flot de traitement sont intégrées dans la chaîne.

Le développement d'une telle chaîne est cependant plus coûteux. Son architecture est plus difficile à mettre au point et peut obliger à redéfinir la conception des circuits intégrés lorsque ceux-ci ne présentent pas suffisamment de surface disponible. De plus, cette solution n'étant qu'une transcription matérielle d'une solution logicielle, des quantités importantes de mémoire et de transferts de données entre les circuits d'accélération et les mémoires sont encore nécessaires. Une analyse fonctionnelle montre qu'une telle architecture dispose d'une quantité de mémoire tampon intermédiaire qui n'est pas indispensable pour la mise en oeuvre des fonctions mais qui facilite la conception et la mise en oeuvre matérielles. Cette quantité de mémoire occupe une surface de circuit non négligeable et génère une consommation de courant inutile.

L'invention vise à résoudre un ou plusieurs de ces inconvénients. L'invention porte ainsi sur un module de traitement dédié, comprenant :
- une entrée de données à traiter et une sortie de données traitées ;
- une entrée de blocage et une sortie de blocage ;
- un organe de traitement, apte à réaliser un traitement numérique sur les données présentes sur l'entrée de données et à appliquer les données traitées sur la sortie de données, apte à générer une requête de blocage ;
- un dispositif de contrôle reproduisant sur la sortie de blocage une requête de blocage appliquée sur l'entrée de blocage ou générée par l'organe de traitement et apte à bloquer l'application de données traitées sur la sortie de données lors de la réception d'une requête de blocage sur l'entrée de blocage.

Selon une variante, le module comprend une entrée de validation et une sortie de validation ; l'organe de traitement effectue un traitement sur les données présentes sur l'entrée de données seulement lorsqu'une requête de validation est appliquée sur l'entrée de validation, et est apte à générer une requête de validation des données traitées et à appliquer cette requête de validation sur la sortie de validation.

Selon encore une variante, le dispositif de contrôle comprend un dispositif de multiplexage présentant une entrée connectée à l'entrée de données à traiter, une entrée connectée à l'entrée de validation, une entrée recevant les données traitées par l'organe de traitement, une entrée recevant une requête de validation générée par l'organe de traitement ; le dispositif de contrôle commande sélectivement au dispositif de multiplexage :
- la connexion de l'entrée de donnée et de l'entrée de validation respectivement à la sortie de données traitées et à la sortie de validation ; ou
- l'application des données traitées par l'organe de traitement et une requête de validation générée par l'organe de traitement respectivement sur la sortie de données traitées et sur la sortie de validation.

Selon une autre variante, l'organe de traitement comprend une entrée d'horloge ; le dispositif de contrôle comprend une entrée d'horloge, et reproduit sélectivement le signal appliqué sur son entrée d'horloge sur l'entrée d'horloge de l'organe de traitement.

Selon encore une autre variante, l'organe de traitement est apte à fournir au dispositif de contrôle un signal indiquant qu'il est en cours de traitement de données; le dispositif de contrôle ne reproduit pas le signal appliqué sur son entrée d'horloge sur l'entrée d'horloge de l'organe de traitement en l'absence de signal indiquant un traitement en cours et lorsque l'organe de contrôle commande la connexion de l'entrée de donnée et de l'entrée de validation respectivement à la sortie de données traitées et à la sortie de validation au dispositif de multiplexage.

On peut également prévoir que le dispositif de contrôle ne reproduit pas le signal appliqué sur son entrée d'horloge sur l'entrée d'horloge de l'organe de traitement en l'absence de signal indiquant un traitement en cours et de requête de validation sur l'entrée de validation.

Selon une variante, le dispositif de contrôle ne reproduit pas le signal appliqué sur son entrée d'horloge sur l'entrée d'horloge de l'organe de traitement lorsqu'une requête de validation est appliquée sur la sortie de validation et lorsqu'une requête de blocage est appliquée sur l'entrée de blocage.

Selon encore une variante, le dispositif de contrôle comprend un dispositif de resynchronisation qui :
- lors de la réception d'une requête de blocage durant un cycle d'horloge, mémorise les données présentes sur l'entrée de données et la requête de validation présente sur l'entrée de validation durant ce cycle d'horloge et reproduit la requête de blocage sur la sortie de blocage durant le cycle d'horloge suivant ;
- lors du cycle d'horloge suivant la disparition de la requête de blocage sur l'entrée de blocage, applique les données et la requête mémorisées respectivement sur la sortie de données et sur la sortie de validation.

L'invention porte également sur une chaîne de flot de traitement, comprenant:
- plusieurs modules de traitement dédiés tels que définis ci-dessus, connectés en série dans la chaîne, la sortie de donnée, la sortie de validation et l'entrée de blocage d'un module étant connectées respectivement à l'entrée de données, à l'entrée de validation et à la sortie de blocage du module le suivant dans la chaîne.

Selon une variante, l'organe de traitement comprend une entrée d'horloge ; le dispositif de contrôle comprend une entrée d'horloge, et reproduit sélectivement le signal appliqué sur son entrée d'horloge sur l'entrée d'horloge de l'organe de traitement ; la chaîne de flot de traitement comprend une interface de contrôle apte à fournir au dispositif de contrôle une requête de court-circuit d'un module de traitement ; le dispositif de contrôle commande au dispositif de multiplexage la connexion de l'entrée de donnée et de l'entrée de validation respectivement à la sortie de données traitées et à la sortie de validation lors de la réception d'une requête de court-circuit.

Selon encore une variante, la chaîne comprend :
- des premier et dernier modules tels que décrits ci-dessus ;
- une interface d'entrée présentant une sortie de données, une sortie de validation et une entrée de blocage connectées respectivement à l'entrée de données, à l'entrée de validation et à la sortie de blocage du premier module ;
- une interface de sortie présentant une entrée de données, une entrée de validation et une sortie de blocage connectées respectivement à la sortie de données, à la sortie de validation et à l'entrée de blocage du dernier module.

L'invention concerne encore un appareil de téléphonie mobile comprenant :
- une chaîne de flot de traitement telle que définie ci-dessus, l'interface d'entrée présentant une entrée de données ;
- un dispositif de transformation de signaux radiofréquences en un flot de données binaire, appliquant le flot de données binaires sur l'entrée de données de l'interface d'entrée.

D'autres caractéristiques et avantages de l'invention ressortiront clairement de la description qui en est faite ci-après, à titre indicatif et nullement limitatif, en référence aux dessins annexés, dans lesquels :
- les figures 1 à 6 illustrent la gestion de flots de traitement selon l'art antérieur ;
- la figure 7 illustre une chaîne de flot de traitement selon l'invention incluant plusieurs modules de traitement dédiés ;
- la figure 8 illustre un exemple de module de traitement dédié selon l'invention ;
- la figure 9 illustre un exemple de dispositif de resynchronisation ;
- la figure 10 illustre un chronogramme de fonctionnement du dispositif de resynchronisation ;
- la figure 11 illustre les interfaces du dispositif de contrôle du module de traitement de la figure 8 ;
- la figure 12 illustre un appareil de téléphonie mobile incluant une chaîne de flot de traitement selon l'invention.

Un module de traitement dédié désignera par la suite un module de traitement effectuant uniquement une fonction de traitement prédéterminée. Les fonctions de traitement mises en oeuvre dans les modules de traitement consistent typiquement à effectuer une addition, une soustraction, une multiplication sur des données d'entrée, ou à ajouter, retirer ou intervertir un ou plusieurs bits dans ces données d'entrée.

L'invention propose de répartir le contrôle d'une chaîne de flot de traitement au niveau de chaque module de traitement de la chaîne. Des signaux de contrôles sont propagés en parallèle des signaux de données dans la chaîne de flot de traitement. Chaque module de traitement de la chaîne échange des signaux de contrôle avec son successeur et son prédécesseur dans la chaîne, afin de se synchroniser avec eux.

L'invention fournit ainsi un moyen simple et peu coûteux à mettre en oeuvre pour gérer et optimiser un flot de traitement à débit variable. L'invention permet en outre de réduire le courant consommé par la chaîne de flot de traitement.

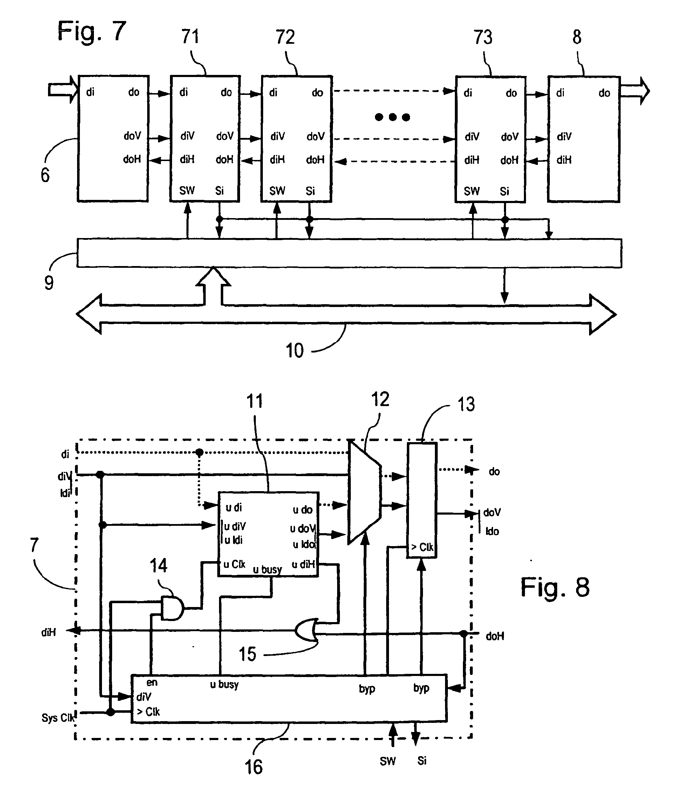

La figure 7 représente une chaîne de flot de traitement 18 selon l'invention. La chaîne de flot de traitement 18 comprend des éléments 6, 71 à 7n et 8, une interface de contrôle 9 et un bus 10. Les éléments incluent une interface d'entrée 6, n modules de traitement dédiés 71 à 7n et une interface de sortie 8. Les éléments sont connectés pour former un canal de transfert et de traitement de données entre l'interface d'entrée 6 et l'interface de sortie 8. Les éléments sont également connectés pour former un canal de transfert de signaux de contrôle. Les signaux de contrôle sont destinés à contrôler le transfert des données dans la chaîne de flot de traitement.

L'interface 6 présente une entrée de données di, une sortie de données do, une sortie de validation de données doV et une entrée de blocage *doH*. Chaque module de traitement dédié 71 à 7n présente une entrée de données di, une entrée de validation de données *diV,* une entrée de blocage *doH*, une sortie de blocage *diH*, une sortie de données do et une sortie de validation de données *doV.* L'interface 8 présente une entrée de données di, une entrée de validation de données *diV,* une sortie de blocage *diH* et une sortie de données *do*.

Les signaux appliqués sur l'entrée di d'un élément sont des données à traiter ou à transférer. Les signaux appliqués sur la sortie *do* d'un élément sont des données traitées ou transférées. Les données traitées ou transférées peuvent être en série ou en parallèle. La taille du bus de données entre les éléments de la chaîne est de préférence constante le long de la chaîne.

Les principaux signaux de contrôle propagés dans la chaîne de flot de traitement sont les suivants :
- les signaux *diV* visent à informer l'élément de la chaîne le recevant que les données transmises par son prédécesseur sont valides. Ces signaux sont donc propagés dans le sens de transfert des données. L'absence de requête de validation sur une entrée *diV* signifie que les données sur l'entrée *di* sont non valides. Cela signifie par exemple que l'élément précédent retire des bits dans le flux de données traitées. Si un module de traitement reçoit des données valides sur son entrée di (si il reçoit une requête de validation sur son entrée *diV*) et qu'il applique des données valides sur sa sortie *do*, il génère une requête de validation et l'applique sur sa sortie *doV.* Le signal *doV* issu d'un élément donné de la chaîne est ainsi un ET logique entre les présences de données valides sur l'entrée *di* de cet élément et sur l'entrée *di* de chaque élément le précédant dans la chaîne.
- les signaux *doH* visent à informer l'élément de la chaîne le recevant que son successeur ne peut pas accepter de données. Ces signaux sont donc propagés dans le sens opposé au transfert des données. La présence d'une requête de blocage sur une entrée *doH* signifie qu'un élément suivant ne peut pas accepter de données, par exemple parce que cet élément suivant ajoute des bits aux données traitées ou requiert du temps de traitement de ses données d'entrée. Si un module de traitement reçoit une requête de blocage sur son entrée doH ou si ce module de traitement détermine l'impossibilité de traiter de nouvelles données entrantes, il applique une requête de blocage sur sa sortie de blocage *diH.* Le signal *diH* au niveau d'un élément donné de la chaîne est ainsi un OU logique entre les requêtes de blocage générées soit par cet élément, soit par les éléments le suivant dans la chaîne.

Comme les commutations sont réduites dans les modules de traitement recevant un signal de blocage, la consommation de courant est réduite.

En termes de gestion mémoire, la présence de données invalides à l'entrée de la chaîne n'est pas gênante car une donnée invalide n'est ni traitée, ni transmise dans la suite de la chaîne. Lorsqu'un élément de la chaîne génère une requête de blocage, les éléments précédents de la chaîne n'ont pas besoin de transfert avec une mémoire tampon : la requête de blocage étant propagée en direction de l'interface d'entrée 6, chacun de ces éléments n'applique plus de nouvelles données valides sur l'entrée *di* de l'élément qui le suit. L'absence de telles mémoires tampon permet de réduire la consommation statique et dynamique de la chaîne de flot de contrôle : le nombre de composants est en effet réduit et les transferts entre ces mémoires et les modules de traitement sont supprimés.

Une mémoire fonctionnelle peut bien entendu être incluse dans la chaîne de flot de traitement, notamment à la suite d'un module de traitement destiné à réaliser un entrelacement des données ou avant un module de traitement dont la fonction exige de connaître l'intégralité d'un bloc de données avant de procéder à son traitement (par exemple pour de la compression d'image par la méthode des ondelettes ou la compression au format JPEG sur des blocs de pixels).

Les interfaces 6 et 8 peuvent être des FIFO d'adaptation de débit, destinées à découpler l'entrée et la sortie de la chaîne de flot de traitement. L'interface 6 peut notamment être connectée à un dispositif de réception de signaux de télécommunication présentant des débits variant dans une plage allant du Kbps à plusieurs Mbps. L'interface 8 peut notamment être connectée à un dispositif de traitement multimédia recevant plusieurs Mbps. L'interface 6 peut être prévue pour réaliser une conversion série/parallèle et de façon correspondante, l'interface 8 peut être prévue pour réaliser une conversion parallèle/série.

Le bus 10 permet à la chaîne de flot de traitement d'échanger des signaux de contrôle avec des dispositifs extérieurs. Le bus 10 permet notamment à une interface logicielle d'intervenir sur le canal de transfert de signaux de contrôle ou sur le canal de transfert de signaux de données. L'interface logicielle peut alors intervenir séparément sur le contrôle de chaque module de traitement dédié, par exemple pour commander un court-circuit d'un module de traitement. Chaque module de traitement dédié peut être associé à des registres de contrôle ainsi qu'à des registres de statut. Des interruptions peuvent ainsi être générées lors d'évènements particuliers et permettent notamment de resynchroniser les données et de contrôler le flot de traitement. Toutes les interruptions sont reportées dans les registres de statut.

L'interface de contrôle 9 peut être commune aux différents modules de traitement dédiés 71 à 7n ou chaque module de traitement dédié peut présenter une interface de contrôle propre.

La figure 8 illustre un mode de réalisation d'un module de traitement 7 selon l'invention. Dans ce module de traitement dédié 7, les trajets des données sont illustrés en pointillés et les trajets des signaux de contrôle et de commande sont illustrés en trait plein. Ce module de traitement 7 comporte d'une part un organe de traitement 11 prévu pour réaliser le traitement numérique spécifique des données et d'autre part différents organes 12 à 16 formant un dispositif de contrôle.

L'organe de traitement 11 présente une entrée u di connectée à l'entrée de données di, une entrée *u div* connectée à l'entrée de validation *diV,* une entrée d'horloge *u clk,* une sortie de données *u do*, une sortie de requêtes de validation *u doV*, une sortie de requêtes de blocage *u diH* et une sortie d'indication d'activité *u busy.*

Le module de traitement 7 comprend un organe de contrôle 16 gérant le fonctionnement de l'organe de traitement 11. L'organe de contrôle 16 gère notamment l'application d'un signal d'horloge local sur l'entrée u *clk* de l'organe de traitement 11. Pour cela, l'organe 16 applique sélectivement un signal d'activation en sur une entrée d'une porte ET 14. Un signal d'horloge système *sys clk* est appliquée sur une autre entrée de la porte 14. La sortie de la porte 14 est connectée à l'entrée *u clk* de l'organe de traitement 11. L'organe de contrôle 16 est ainsi apte à bloquer sélectivement l'application d'un signal d'horloge sur l'entrée *u clk*, et ainsi de réduire la consommation de l'organe de traitement 11 lorsque celui-ci est inactif.

Afin de déterminer quand l'application du signal d'horloge sur l'entrée *u clk* doit être bloquée, l'organe de contrôle 16 reçoit et traite des signaux de contrôle et de commande. L'organe de contrôle 16 présente ainsi une entrée *diV* de validation, une entrée *clk* recevant une horloge système *sys clk* commune à la chaîne 18, une entrée *doH* de blocage, une entrée *u busy* connectée à l'organe de traitement 11 et une entrée *SW* pour recevoir des commandes provenant de l'interface 9.

Le signal en d'activation invalide le signal d'horloge système appliqués sur la porte ET 14 si :
- l'organe 16 reçoit une commande de court-circuit et que l'organe 11 ne fournit pas de signal sur l'entrée *u busy ;*
- l'organe 16 ne reçoit pas une requête de validation sur son entrée *diV* et que l'organe 11 ne fournit pas de signal sur l'entrée *u busy ;*
- l'organe 16 reçoit une requête de blocage sur son entrée *doH* alors que l'organe 11 applique une requête de validation sur sa sortie *u doV.*

Le signal d'horloge appliqué sur l'entrée *u clk* du dispositif 11 peut ainsi être asynchrone du reste de la chaîne 18.

Le module de traitement 7 comprend une porte OU 15 dont une entrée est connectée à la sortie de blocage *u diH* de l'organe de traitement 11 et dont l'autre entrée est connectée à l'entrée de blocage *doH* du module 18. La sortie de la porte OU 15 est connectée à la sortie de blocage *diH* du module 18.

Afin de fournir une possibilité à une interface logicielle de court-circuiter le module de traitement 7 lorsqu'il est inutile dans le flot de traitement, ce module 7 comporte de préférence un dispositif de multiplexage 12. Le dispositif de multiplexage 12 a une entrée connectée à l'entrée de données di, une entrée connectée à l'entrée de validation *diV* et deux entrées connectées respectivement aux sorties u do et u doV de l'organe 11. Le dispositif de multiplexage 12 présente par ailleurs une entrée de sélection recevant un signal de sélection appliqué par une sortie *byp* de l'organe de contrôle 16.

Lors de la réception d'une commande de court-circuit sur son entrée *SW*, l'organe de contrôle 16 applique un signal de court-circuit sur l'entrée de sélection du dispositif 12. Le dispositif de multiplexage 12 reproduit alors l'état des entrées di et *diV* sur ses sorties. L'entrée de données di du module est alors connectée à la sortie de donnée do et l'entrée de validation *diV* du module est alors connectée à la sortie de validation *doV.* Lorsque aucun signal de court-circuit n'est appliqué sur l'entrée de sélection, le dispositif 12 reproduit l'état des sorties *u do* et *u doV* de l'organe de traitement 11 sur ses sorties.

Ainsi, chaque module peut être court-circuité dans la chaîne de flot traitement 18, par exemple pour des raisons fonctionnelles ou pour réaliser un test de déboggage de la chaîne.

Les requêtes de blocage subissent un retard induit par la traversée des portes OU 15. Lorsque la chaîne de flot de traitement présente un nombre important de modules de traitement dédiés, ce retard peut dépasser la durée d'un cycle d'horloge et induire un problème de synchronisation. Afin d'éviter ce type de problème, le module de traitement 7 présente avantageusement une mémoire de resynchronisation 13 mémorisant les données à appliquer sur la sortie de données *do* et la requête de validation à appliquer sur la sortie *doV,* pendant au moins un cycle d'horloge. L'organe de contrôle 16 gère alors la resynchronisation de la requête de blocage, la mémoire de resynchronisation 13 empêchant alors une perte d'information. Afin de conserver un contrôle cohérent, le dispositif de contrôle effectue également une synchronisation des requêtes de validation.

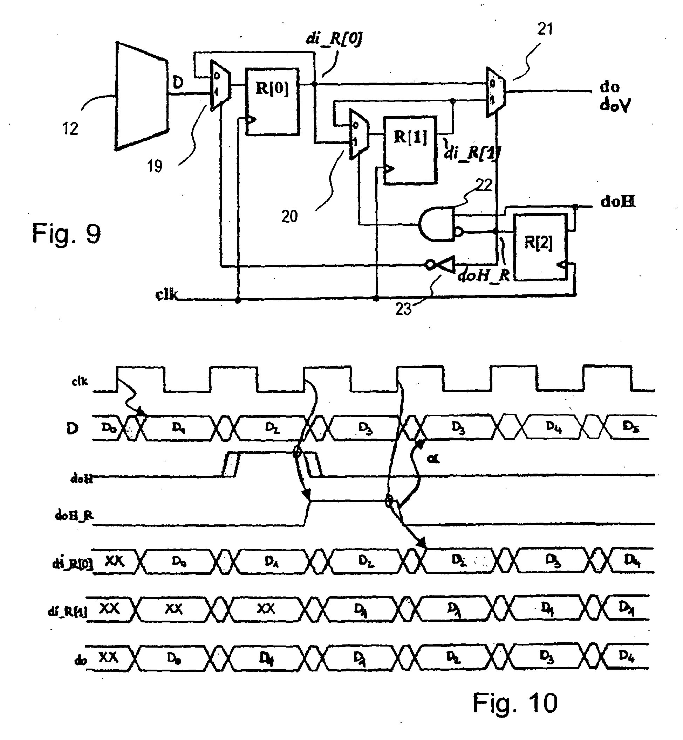

La figure 9 illustre un exemple de constitution de la mémoire de resynchronisation 13. Cette mémoire 13 comprend trois registres R[0], R[1] et R[2], trois dispositifs de multiplexage 19 à 21, une porte ET 22 et un inverseur 23. Le signal d'horloge système est appliqué sur l'entrée d'horloge de chacun des registres.

Les signaux D (comprenant des données et une éventuelle requête de validation) sortant du dispositif de multiplexage 12 sont appliqués sur une entrée du dispositif de multiplexage 19. L'autre entrée du dispositif de multiplexage 19 est connectée à la sortie du registre R[0] (signal di_R[0]). La sortie du dispositif 19 est connectée à l'entrée du registre R[0]. La borne de sélection du dispositif 19 est connectée à la sortie de l'inverseur 23. La sortie du registre R[0] est connectée à une entrée du dispositif de multiplexage 20. L'autre entrée du dispositif de multiplexage 20 est connectée à la sortie du registre R[1] (signal di_R[1]). La borne de sélection du dispositif 20 est connectée à la sortie de la porte ET 22. La sortie du registre R [1] est connectée à une entrée du dispositif de multiplexage 21. La sortie du registre R[0] est connectée à l'autre entrée du dispositif de multiplexage 21. La sortie du dispositif 21 est connectée à la sortie de données *do* et à la sortie de validation *doV.* La borne de sélection du dispositif 21 est connectée à la sortie du registre R[2]. Le signal doH est appliqué sur l'entrée du registre R[2] et sur une entrée de la porte ET 22. La sortie du registre R[2] est connectée à l'entrée de l'inverseur 23, et connectée à l'autre entrée de la porte ET 22 par l'intermédiaire d'un inverseur.

La figure 10 illustre le fonctionnement de cette mémoire lorsque le module 7 reçoit une requête de blocage. Le registre R[0] et le dispositif 19 permettent de mémoriser la donnée appliquée par le module de traitement précédent tant que la suite de la chaîne de flot de traitement est bloquée. Ainsi, ni l'organe de traitement 7, ni le module de traitement précédent n'ont à gérer la synchronisation. Le registre R[1], le dispositif 20 et la porte 22 permettent de mémoriser la donnée fournie par le module de traitement précédent au cycle précédent, lorsqu'une transition sur l'entrée doH est détectée. Le registre R[2] permet de mémoriser le signal *doH*. Le retard induit par R[2] est compensé par un registre contrôlé par l'état de R[2]. Le registre compensant ce retard est soit R[0] lorsque l'état *doH=*1 est établi, soit R[1] lors de la détection d'une transition de *doH*=0 vers *doH*=1. Le signal *DoH_R* généré est appliqué indirectement sur la sortie *diH*. On garantit ainsi que les données et la requête de validation sont bien mémorisés dans la mémoire de resynchronisation 13 lors de l'exécution de la requête de blocage et que la requête de blocage est bien exécutée par l'élément précédent de la chaîne.

On constate ainsi que la transmission des données D3 est bien bloquée durant un cycle d'horloge système dans l'élément précédant sans que les données D2 ne soient perdues dans le module 7 suite au traitement de la requête de blocage reçue sur l'entrée doH.

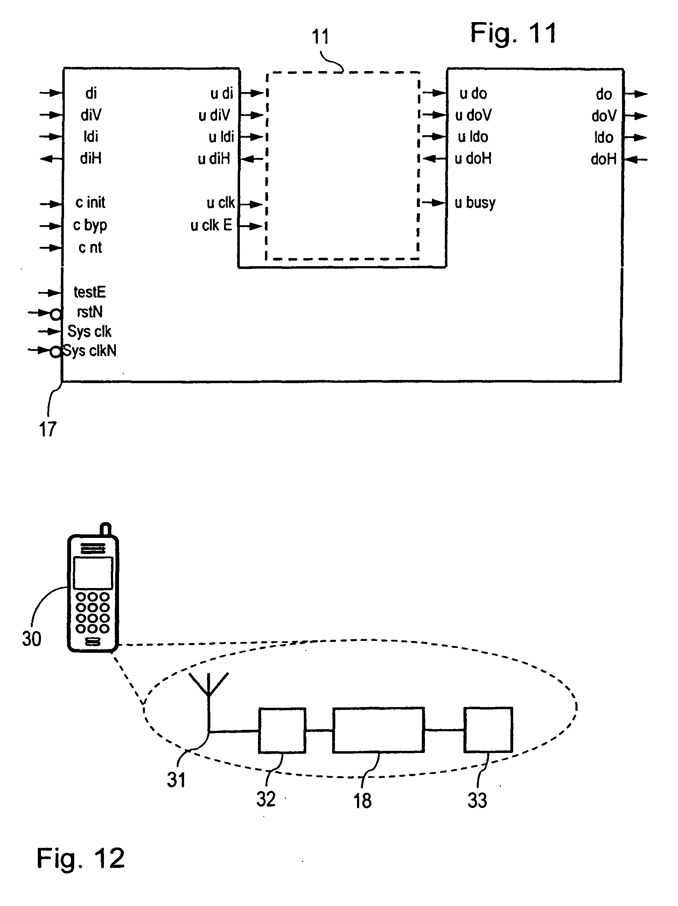

La figure 11 illustre un exemple d'interfaces d'un dispositif de contrôle 17.

Le tableau ci-dessous illustre les différents signaux échangés au niveau des interfaces de ce dispositif de contrôle :

| Nom | | Type | Taille | Fonction |
|---|---|---|---|---|
| Signaux de synchronisation | | | | |
| Sys Clk | | H | | Horloge système |
| Sys | | H | | Complément de l'horloge système |
| RstN | | E | | Réinitialisation asynchrone |
| TestE | | E | | Passage en mode de test |

| Signaux de commande | | | | |
|---|---|---|---|---|
| C | E | | | Signal d'initialisation logiciel, efface les |
| C byp | E | | | Court-circuit de l'organe de traitement commandé |
| C nt | E | | | Réveil de l'organe de traitement commandé par |
| U | E | | | L'organe de traitement indique l'exécution d'un |
| U clk | S | | | Horloge pour l'organe de traitement |
| U clkE | S | | | Validation d'horloge de l'organe de traitement, permet un fonctionnement synchrone des organes de traitement |

| Signaux de données | | | | |
|---|---|---|---|---|
| Di | E | | Di bits | Données fournies à l'entrée par l'élément |
| U di | S | | Di bits | Données à traiter appliquées à l'entrée de |
| Do | S | | Do bits | Données appliquées sur la sortie pour l'élément |
| U do | E | | Do bits | Données traitées fournies par l'organe de |

| Signaux de contrôle | | | | |
|---|---|---|---|---|
| DiV | E | | | Validation des données à traiter transmise par |
| Ldi | E | | | Indication par l'élément précédent de la fin des |
| DiH | S | | | Requête de blocage transmise à l'élément précédent |
| U diV | S | | | Valide le traitement des données à l'entrée de |
| U ldi | S | | | Indique la fin des données d'un bloc à traiter à |
| U diH | E | | | Requête de blocage générée par l'organe de |
| DoV | S | | | Validation des données à traiter transmise vers |
| Ldo | S | | | Indique à l'élément suivant la fin des données |
| DoH | E | | | Requête de blocage transmise par l'élément suivant |
| U doV | E | | | Validation des données traitées, générée par |
| U ldO | E | | | Indication de la fin des données d'un bloc de données traitées, générée par l'organe de traitement |
| U doH | S | | | Requête de blocage transmise à l'organe de |

Dans la seconde colonne, H identifie les signaux d'horloge, E identifie les signaux entrants et S identifie les signaux sortants.

Le dispositif de contrôle 17 active l'organe de traitement 11 lorsqu'un signal extérieur c init ou c nt est reçu. Le dispositif de contrôle 17 active également l'organe de traitement 11 lorsque :
- aucune requête de blocage n'est transmise par l'élément suivant dans la chaîne (entrée doH) ; et
- l'élément précédant de la chaîne transmet une requête de validation (entrée *diV*) ou l'organe de traitement 11 signale (sur l'entrée *u busy*) qu'il doit poursuivre un traitement interne sur des données.

La figure 12 illustre un appareil de téléphonie mobile 30 incluant une chaîne de flot de traitement 18 selon l'invention. L'appareil 30 comprend une antenne de réception 31, un dispositif de réception 32 traitant les signaux radiofréquences transmis par l'antenne, une chaîne de flot traitement 18 recevant sur son interface d'entrée les données fournies par le dispositif 32 et un dispositif 33 exploitant les données fournies par l'interface de sortie de la chaîne 18. Le dispositif 33 peut notamment comprendre des moyens de traitement multimédia commandant un écran ou des haut-parleurs de l'appareil 30.

## Revendications

1. Module de traitement dédié (7), **caractérisé en ce qu'**il comprend :
- une entrée de données (di) à traiter et une sortie de données traitées (do) ;
- une entrée de blocage (doH) et une sortie de blocage (diH);
- un organe de traitement (11), apte à réaliser un traitement numérique sur les données présentes sur l'entrée de données et à appliquer les données traitées sur la sortie de données, apte à générer une requête de blocage ;
- un dispositif de contrôle reproduisant sur la sortie de blocage une requête de blocage appliquée sur l'entrée de blocage ou générée par l'organe de traitement et apte à bloquer l'application de données traitées sur la sortie de données lors de la réception d'une requête de blocage sur l'entrée de blocage.

2. Module de traitement dédié (7) selon la revendication 1 :
- comprenant une entrée de validation (diV) et une sortie de validation (doV);
- dans lequel l'organe de traitement effectue un traitement sur les données présentes sur l'entrée de données seulement lorsqu'une requête de validation est appliquée sur l'entrée de validation, et est apte à générer une requête de validation des données traitées et à appliquer cette requête de validation sur la sortie de validation.

3. Module de traitement dédié (7) selon la revendication 2 :
- dans lequel le dispositif de contrôle comprend un dispositif de multiplexage (12) présentant une entrée connectée à l'entrée de données à traiter, une entrée connectée à l'entrée de validation, une entrée recevant les données traitées par l'organe de traitement, une entrée recevant une requête de validation générée par l'organe de traitement ;
- dans lequel le dispositif de contrôle commande sélectivement au dispositif de multiplexage :
- la connexion de l'entrée de donnée et de l'entrée de validation respectivement à la sortie de données traitées et à la sortie de validation ; ou
- l'application des données traitées par l'organe de traitement et une requête de validation générée par l'organe de traitement respectivement sur la sortie de données traitées et sur la sortie de validation.

4. Module de traitement dédié (7) selon l'une quelconque des revendications précédentes :
- dans lequel l'organe de traitement comprend une entrée d'horloge ;
- dans lequel le dispositif de contrôle comprend une entrée d'horloge, et reproduit sélectivement le signal appliqué sur son entrée d'horloge sur l'entrée d'horloge de l'organe de traitement.

5. Module de traitement dédié (7) selon les revendications 3 et 4 :
- dans lequel l'organe de traitement est apte à fournir au dispositif de contrôle un signal indiquant qu'il est en cours de traitement de données;
- dans lequel le dispositif de contrôle ne reproduit pas le signal appliqué sur son entrée d'horloge sur l'entrée d'horloge de l'organe de traitement en l'absence de signal indiquant un traitement en cours et lorsque l'organe de contrôle commande la connexion de l'entrée de donnée et de l'entrée de validation respectivement à la sortie de données traitées et à la sortie de validation au dispositif de multiplexage.

6. Module de traitement dédié (7) selon les revendications 2 et 4,dans lequel le dispositif de contrôle ne reproduit pas le signal appliqué sur son entrée d'horloge sur l'entrée d'horloge de l'organe de traitement en l'absence de signal indiquant un traitement en cours et de requête de validation sur l'entrée de validation.

7. Module de traitement dédié (7) selon les revendications 2 et 4, dans lequel le dispositif de contrôle ne reproduit pas le signal appliqué sur son entrée d'horloge sur l'entrée d'horloge de l'organe de traitement lorsqu'une requête de validation est appliquée sur la sortie de validation et lorsqu'une requête de blocage est appliquée sur l'entrée de blocage.

8. Module de traitement dédié (7) selon l'une quelconque des revendications 2 à 7, dans lequel le dispositif de contrôle comprend un dispositif de resynchronisation qui :
- lors de la réception d'une requête de blocage durant un cycle d'horloge, mémorise les données présentes sur l'entrée de données et la requête de validation présente sur l'entrée de validation durant ce cycle d'horloge et reproduit la requête de blocage sur la sortie de blocage durant le cycle d'horloge suivant ;
- lors du cycle d'horloge suivant la disparition de la requête de blocage sur l'entrée de blocage, applique les données et la requête mémorisées respectivement sur la sortie de données et sur la sortie de validation.

9. Chaîne de flot de traitement (18), comprenant:
- plusieurs modules de traitement dédiés selon la revendication 2, ou selon la revendication 2 et l'une quelconque des revendications 3 à 8, connectés en série dans la chaîne, la sortie de donnée, la sortie de validation et l'entrée de blocage d'un module étant connectées respectivement à l'entrée de données, à l'entrée de validation et à la sortie de blocage du module le suivant dans la chaîne.

10. Chaîne de flot de traitement (18) selon la revendication 9:
- dans laquelle les modules de traitement sont conformes à la revendication 4 ;
- la chaîne de flot de traitement comprend une interface de contrôle apte à fournir au dispositif de contrôle une requête de court-circuit d'un module de traitement ;
- dans laquelle le dispositif de contrôle commande au dispositif de multiplexage la connexion de l'entrée de donnée et de l'entrée de validation respectivement à la sortie de données traitées et à la sortie de validation lors de la réception d'une requête de court-circuit.

11. Chaîne de flot de traitement (18) selon la revendication 9 ou 10, comprenant :
- des premier et dernier modules selon la revendication 2 ou selon la revendication 2, et l'une quelconque des revendications 3 à 8 ;
- une interface d'entrée (6) présentant une sortie de données, une sortie de validation et une entrée de blocage connectées respectivement à l'entrée de données, à l'entrée de validation et à la sortie de blocage du premier module ;
- une interface de sortie (8) présentant une entrée de données, une entrée de validation et une sortie de blocage connectées respectivement à la sortie de données, à la sortie de validation et à l'entrée de blocage du dernier module.

12. Appareil de téléphonie mobile (30) comprenant :
- une chaîne de flot de traitement selon la revendication 11, l'interface d'entrée présentant une entrée de données ;
- un dispositif de transformation de signaux radiofréquences en un flot de données binaire, appliquant le flot de données binaires sur l'entrée de données de l'interface d'entrée.

## Claims

1. Dedicated processing module (7), **characterized in that** it includes:
- a data input (di) for data to be processed and a data output (do) for processed data;
- a blocking input (doH) and a blocking output (diH);
- a processing component (11), capable of performing a digital processing operation on the data present at the data input and of applying the processed data at the data output, capable of generating a blocking request;
- a control device reproducing, at the blocking output, a blocking request applied to the blocking input or generated by the processing component and capable of blocking the application of processed data at the data output upon receipt of a blocking request at the blocking input.

2. Dedicated processing module (7) according to claim 1:
- including a validation input (diV) and a validation output (doV);
- in which the processing component performs a processing operation on the data present at the data input only when a validation request is applied at the validation input, and is capable of generating a request to validate processed data and of applying this validation request at the validation output.

3. Dedicated processing module (7) according to claim 2:
- in which the control device includes a multiplexing device (12) having an input connected to the input for data to be processed, an input connected to the validation input, an input receiving the data processed by the processing component, an input receiving the data processed by the processing component, an input receiving a validation request generated by the processing component;
- in which the control device selectively commands the multiplexing device to carry out:
- the connection of the data input and the validation input to the output for processed data and the validation output, respectively; or
- the application of the data processed by the processing component and a validation request generated by the processing component at the processed data output and at the validation output, respectively.

4. Dedicated processing module (7) according to any one of the previous claims:
- in which the processing component includes a clock input;
- in which the control device includes a clock input, and selectively reproduces the signal applied at its clock input at the clock input of the processing component.

5. Dedicated processing module (7) according to claims 3 and 4:
- in which the processing component is capable of providing the control device with a signal indicating that it is currently processing data;
- in which the control device does not reproduce the signal applied at its clock input at the clock input of the processing component in the absence of a signal indicating a processing operation in progress, and when the control component commands the multiplexing device to carry out the connection of the data input and the validation input to the processed data output and the validation output, respectively.

6. Dedicated processing module (7) according to claims 2 and 4, in which the control device does not reproduce the signal applied at its clock input at the clock input of the processing component in the absence of a signal indicating a processing operation in progress and of a validation request at the validation input.

7. Dedicated processing module (7) according to claims 2 and 4, in which the control device does not reproduce the signal applied at its clock input at the clock input of the processing component when a validation request is applied at the validation output and when a blocking request is applied at the blocking input.

8. Dedicated processing module (7) according to any one of claims 2 to 7, in which the control device includes a resynchronization device that:
- upon receipt of a blocking request during a clock cycle, stores the data present at the data input and the validation request present at the validation input during this clock cycle, and reproduces the blocking request at the blocking output during the next clock cycle;
- during the clock cycle following the disappearance of the blocking request at the blocking input, applies the stored data and request respectively at the data output and at the validation output.

9. Processing flow chain (18), including:
- a plurality of dedicated processing modules according to claim 2, or according to claim 2 and any one of claims 3 to 8, connected in series in the chain, the data output, the validation output and the blocking input of a module being connected respectively to the data input, the validation input and the blocking output of the module following it in the chain.

10. Processing flow chain (18) according to claim 9:
- in which the processing modules correspond to claim 4;
- the processing flow chain includes a control interface capable of providing the control device with a request to short-circuit a processing module;
- in which the control device commands the multiplexing device to carry out the connection of the data input and the validation input respectively to the processed data output and the validation output upon receipt of a short-circuit request.

11. Processing flow chain (18) according to claim 9 or 10, including:
- first and last modules according to claim 2 or according to claim 2 and any one of claims 3 to 8;
- an input interface (6) having a data output, a validation output and a blocking input connected respectively to the data input, the validation input and the blocking output of the first module;
- an output interface (8) having a data input, a validation input and a blocking output connected respectively to the data output, the validation output and the blocking input of the last module.

12. Mobile telephony apparatus (30) including:
- a processing flow chain according to claim 11, wherein the input interface has a data input;
- a device for transforming radiofrequency signals into a binary data flow, applying the binary data flow at the data input of the input interface.

## Patentansprüche

1. Dediziertes Verarbeitungsmodul (7), **dadurch gekennzeichnet, dass** es aufweist:
- einen Eingang für zu verarbeitende Daten (di) und einen Ausgang für verarbeitete Daten (do);
- einen Sperreingang (doH) und einen Sperrausgang (diH);
- ein Verarbeitungsorgan (11), das dafür geeignet ist, eine digitale Verarbeitung an den am Dateneingang vorliegenden Daten vorzunehmen und die verarbeiteten Daten an den Datenausgang zu schicken, und das dafür geeignet ist, eine Sperranforderung zu generieren;
- eine Kontrollvorrichtung, welche an dem Sperrausgang eine an den Sperreingang geschickte oder von dem Verarbeitungsorgan generierte Sperranforderung reproduziert und dafür geeignet ist, das Senden der verarbeiteten Daten an den Datenausgang während des Empfangs einer Sperranforderung an dem Sperreingang zu sperren.

2. Dediziertes Verarbeitungsmodul (7) gemäß Anspruch 1:
- mit einem Validierungseingang (diV) und einem Validierungsausgang (doV);
- wobei das Verarbeitungsorgan nur dann eine Verarbeitung an den am Dateneingang vorliegenden Daten vornimmt, wenn eine Validierungsanforderung an den Validierungseingang geschickt wird, und wobei es dazu in der Lage ist, eine Validierungsanforderung für die verarbeiteten Daten zu generieren und diese Validierungsanforderung an den Validierungsausgang zu schicken.

3. Dediziertes Verarbeitungsmodul (7) gemäß Anspruch 2:
- wobei die Kontrollvorrichtung eine Multiplexvorrichtung (12) aufweist, welche einen an den Eingang für die zu verarbeitenden Daten angeschlossenen Eingang, einen an den Validierungseingang angeschlossenen Eingang, einen die von dem Verarbeitungsorgan verarbeiteten Daten empfangenden Eingang und einen Eingang aufweist, welcher eine von dem Verarbeitungsorgan generierte Validierungsanforderung empfängt;
- wobei die Kontrollvorrichtung der Multiplexvorrichtung selektiv befiehlt:
- den Anschluss des Dateneingangs und des Validierungseingangs jeweils an den Ausgang für die verarbeiteten Daten und an den Validierungsausgang; oder
- das Senden der von dem Verarbeitungsorgan verarbeiteten Daten und einer von dem Verarbeitungsorgan generierten Validierungsanforderung jeweils an den Ausgang für die verarbeiteten Daten und an den Validierungsausgang.

4. Dediziertes Verarbeitungsmodul (7) gemäß irgendeinem der vorherigen Ansprüche:
- wobei das Verarbeitungsorgan einen Takteingang aufweist;
- wobei die Kontrollvorrichtung einen Takteingang aufweist und selektiv das an ihren Takteingang gesandte Signal an dem Takteingang des Verarbeitungsorgans reproduziert.

5. Dediziertes Verarbeitungsmodul (7) gemäß den Ansprüchen 3 und 4:
- wobei das Verarbeitungsorgan in der Lage ist, der Kontrollvorrichtung ein Signal zu liefern, welches anzeigt, dass es sich in einer Datenverarbeitung befindet;
- wobei die Kontrollvorrichtung bei Fehlen des Signals, welches eine laufende Verarbeitung anzeigt, und wenn das Kontrollorgan den Anschluss des Dateneingangs und des Validierungseingangs jeweils an den Ausgang für die verarbeiteten Daten und an den Validierungsausgang der Multiplexvorrichtung befiehlt, das an ihren Takteingang gesandte Signal an dem Takteingang des Verarbeitungsorgans nicht reproduziert.

6. Dediziertes Verarbeitungsmodul (7) gemäß den Ansprüchen 2 und 4, wobei die Kontrollvorrichtung bei Fehlen des Signals, welches eine laufende Verarbeitung anzeigt, und bei Fehlen einer Validierungsanforderung an dem Validierungseingang das an ihren Takteingang gesandte Signal an dem Takteingang des Verarbeitungsorgans nicht reproduziert.

7. Dediziertes Verarbeitungsmodul (7) gemäß den Ansprüchen 2 und 4, wobei die Kontrollvorrichtung das an ihren Takteingang gesandte Signal an dem Takteingang des Verarbeitungsorgans nicht reproduziert, wenn eine Validierungsanforderung an den Validierungsausgang gesandt ist, und wenn eine Sperranforderung an den Sperreingang gesandt ist.

8. Dediziertes Verarbeitungsmodul (7) gemäß irgendeinem der Ansprüche 2 bis 7, wobei die Kontrollvorrichtung eine Vorrichtung zur erneuten Synchronisierung aufweist, welche:
- während des Empfangs einer Sperranforderung während eines Taktzyklus die am Dateneingang vorliegenden Daten und die am Validierungseingang vorliegende Validierungsanforderung während dieses Taktzyklus speichert und die Sperranforderung während des folgenden Taktzyklus an dem Sperrausgang reproduziert;
- während des Taktzyklus, der dem Verschwinden der Sperranforderung an dem Sperreingang folgt, die gespeicherten Daten und die gespeicherte Anforderung jeweils zu dem Datenausgang und zu dem Validierungsausgang schickt.

9. Datenverarbeitungskette (18), mit:
- mehreren dedizierten Verarbeitungsmodulen gemäß Anspruch 2 oder gemäß Anspruch 2 und irgendeinem der Ansprüche 3 bis 8, die in der Kette in Reihe geschaltet sind, wobei der Datenausgang, der Validierungsausgang und der Sperreingang eines Moduls jeweils an den Dateneingang, an den Validierungseingang und an den Sperrausgang des in der Kette nachfolgenden Moduls angeschlossen sind.

10. Datenverarbeitungskette (18) gemäß Anspruch 9:
- wobei die Verarbeitungsmodule gemäß dem Anspruch 4 ausgebildet sind;
- wobei die Datenverarbeitungskette eine Kontrollschnittstelle aufweist, die dazu in der Lage ist, eine Kurzschlussanforderung für ein Verarbeitungsmodul an die Kontrollvorrichtung zu liefern;
- wobei die Kontrollvorrichtung der Multiplexvorrichtung den Anschluss des Dateneingangs und des Validierungseingangs jeweils an den Ausgang für die verarbeiteten Daten und an den Validierungsausgang während des Empfangs einer Kurzschlussanforderung befiehlt.

11. Datenverarbeitungskette (18) gemäß Anspruch 9 oder 10, mit:
- einem ersten und letzten Modul gemäß Anspruch 2 oder gemäß Anspruch 2 und irgendeinem der Ansprüche 3 bis 8;
- einer Eingangsschnittstelle (6), welche einen Datenausgang, einen Validierungsausgang und einen Sperreingang aufweist, welche jeweils an den Dateneingang, an den Validierungseingang und an den Sperrausgang des ersten Moduls angeschlossen sind;
- einer Ausgangsschnittstelle (8), welche einen Dateneingang, einen Validierungseingang und einen Sperrausgang aufweist, welche jeweils an den Datenausgang, an den Validierungsausgang und an den Sperreingang des letzten Moduls angeschlossen sind.

12. Mobiltelefongerät (30) mit:
- einer Datenverarbeitungskette gemäß Anspruch 11, wobei die Eingangsschnittstelle einen Dateneingang aufweist;
- einer Vorrichtung zur Umwandlung von Hochfrequenzsignalen in einen Strom binärer Daten, wobei der Strom binärer Daten an den Dateneingang der Eingangsschnittstelle gesandt wird.
